# EUROPEAN PATENT APPLICATION

(11) **EP 4 769 504 A1**
(43) Date of publication of application: **01.07.2026**
(21) Application number: 24860311.0
(22) Date of filing: 22.08.2024
(51) Int. Cl.: H01M 4/13, H01M 4/72, H01M 10/052

(54) **LITHIUM SECONDARY BATTERY ELECTRODE AND MANUFACTURING METHOD THEREFOR**

(30) Priority: 25.08.2023 KR 20230111973
(71) Applicant: SK On Co., Ltd., Seoul 03161 (KR)
(72) Inventor: YOON, Na Eun, Daejeon 34124 (KR); LEE, Jae Woo, Daejeon 34124 (KR); CHOI, Bit Na, Daejeon 34124 (KR)
(74) Representative: Prüfer & Partner mbB Patentanwälte · Rechtsanwälte
(86) International application number: PCT/KR2024/012498
(87) International publication number: WO 2025/048391

(57) **Abstract**

According to embodiments of the present disclosure, the electrode for a lithium secondary battery may comprise: an electrode current collector; a surface modification layer disposed on the electrode current collector; and a porous layer disposed on the surface modification layer. The lithium secondary battery may include an electrode for a lithium secondary battery and a counter electrode. Stability and electrochemical characteristics of the lithium secondary battery can be improved.

## Description

### [TECHNICAL FIELD]

The present disclosure relates to an electrode for a lithium secondary battery, a lithium secondary battery including the same, and a method of manufacturing an electrode for a lithium secondary battery.

### [BACKGROUND ART]

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as a hybrid vehicle.

Examples of the secondary battery include a lithium secondary battery, a nickelcadmium battery, a nickel-hydrogen battery, etc. The lithium secondary battery among the secondary batteries can be advantageous from aspects of high operational voltage and energy density per unit weight, a high charging rate, a compact dimension, etc.

Graphite, silicon, or the like, are mainly used as an anode material of a lithium secondary battery, but graphite and silicon have a high reaction potential and a low capacity, and thus have limitations in increasing an energy density and a capacity of the lithium secondary battery. Lithium metal has a low potential and a high capacity, and thus an efficiency and the energy density of the lithium secondary battery may be increased.

However, when lithium metal is used, lithium may grow irregularly on a surface of lithium metal during charging process to form lithium dendrites. Accordingly, a short circuit, a heat generation, and an explosion of an electrode may occur. Further, during a process of electrodeposition and desorption of lithium on the surface of lithium metal, a volume change of the electrode may increase to result in a decrease in life-span and stability of the lithium secondary battery.

### DETAILED DESCRIPTIONS OF THE INVENTION

### [Technical Objective]

According to an objective of the present disclosure, there is provided an electrode for a lithium secondary battery having improved stability.

According to an objective of the present disclosure, there is provided a lithium secondary battery having improved stability.

### [Means for Resolving the Objective]

An electrode for a lithium secondary battery according to embodiments of the present disclosure includes an electrode current collector, a surface modification layer disposed on the electrode current collector, and a porous layer disposed on the surface modification layer.

In some embodiments, the surface modification layer may include a lithiophilic material.

In some embodiments, lithium ions may be reduced to lithium metal on the lithiophilic material at a voltage lower than a voltage at which the lithiophilic material and the lithium ions form an alloy.

In some embodiments, the surface modification layer may include boron nitride.

In some embodiments, boron nitride may have an amorphous structure.

In some embodiments, a thickness of the surface modification layer may be smaller than a thickness of the porous layer.

In some embodiments, the porous layer may include a lithiophilic material.

In some embodiments, the porous layer may include at least one metal selected from the group consisting of Cu, Zn, Ti, Au, Pt, Mg, Sn, Ag, Al, In, Pb, Bi or Sb, an oxide thereof, or an alloy of two or more thereof.

In some embodiments, the porous layer may include a matrix including the lithiophilic material, and pores formed at a surface and an interior of the matrix.

In some embodiments, the porous layer may include fibers or a porous foam which comprises the lithiophilic material.

In some embodiments, the porous layer may include a framework containing the lithiophilic material and having a three-dimensional network structure.

In some embodiments, the porous layer may include metal-containing particles that may contain the lithiophilic material, and voids formed between the metal-containing particles.

In some embodiments, the metal-containing particles may have a dendrite shape.

In some embodiments, the metal-containing particles may include a core and a coating covering at least a portion of the core, the coating comprising the lithiophilic material.

In some embodiments, the core may include at least one metal selected from the group consisting of Ni, Mn, Fe, Co, Cr, W, Ru, Cu, Zn, Ti, Au, Ag, Pt, Mg, Sn, Al, In, Pb, Bi or Sb, an oxide thereof, or an alloy of two or more thereof.

In some embodiments, at least some of the pores may be connected from an upper surface of the surface modification layer to an upper surface of the porous layer.

In some embodiments, the surface modification layer may have a non-porous structure.

A lithium secondary battery according to embodiments of the present disclosure may include the electrode for a lithium secondary battery, and a counter electrode opposing the electrode for a lithium secondary battery electrode.

### [Effects of the Invention]

An electrode for a lithium secondary battery may include an electrode current collector, a surface modification layer formed on the electrode current collector and including boron nitride, and a porous layer disposed on the surface modification layer. A top plating phenomenon that lithium is electrodeposited only on an upper portion of a porous layer may be prevented, and a lower electrodeposition of lithium metal can be induced.

Lithium metal may be uniformly electrodeposited in an interior of the porous layer, so that a change in volume of an electrode layer may be reduced. A growth of a lithium dendrites due to non-uniform electrodeposition of lithium may be prevented. Stability and electrical properties of the lithium secondary battery can be improved.

### [Brief Descriptions of the Drawings]

FIG. 1 is a schematic cross-sectional view illustrating an electrode for a lithium secondary battery according to example embodiments.
FIG. 2 is a schematic cross-sectional view illustrating an electrode for a lithium secondary battery according to example embodiments.
FIG. 3 is a schematic cross-sectional view illustrating an electrode for a lithium secondary battery according to example embodiments.
FIG. 4 is a schematic cross-sectional view illustrating an electrode for a lithium secondary battery according to example embodiments.
FIGS. 5 and 6 are schematic views illustrating metal-containing particles according to example embodiments.
FIGS. 7A to 7D are images of electrodes for a lithium secondary battery of Examples and Comparative Examples.
FIGS. 8A to 8D are SEM images of cross-sections of electrodes for a lithium secondary battery according to Examples and Comparative Examples.
FIG. 9 is a graph showing capacity retentions of lithium secondary batteries of Example and Comparative Examples.

### [Implementation for Practicing the Invention]

According to embodiments of the present, an electrode for a lithium secondary battery including an electrode current collector, a surface modification layer and a porous layer, and a lithium secondary battery are provided.

The lithium secondary battery of the present disclosure may be widely applied in green technology fields such as an electric vehicle, a battery charging station, a solar power generation, a wind power generation using batteries, and may also be used in eco-friendly electric vehicles and hybrid vehicles for preventing climate change by suppressing air pollution and greenhouse gas emission.

The terms such as "upper portion", "lower portion", "top surface", "lower surface", "bottom surface", etc., are used in a relative sense to distinguish different elements or positions, and do not specify an absolute position.

Unless otherwise defined herein, when a part such as a layer, a film, a thin film, a region, a plate, etc. is expressed as being "on" or "over" another part, the expression may include a case where the part is "directly on" another part, and a case where still another part is between the part and another part.

Hereinafter, embodiments of the present disclosure will be described in detail with reference to accompanying drawings. However, these embodiments are merely provided as examples the present disclosure is not limited to the specific embodiments described herein.

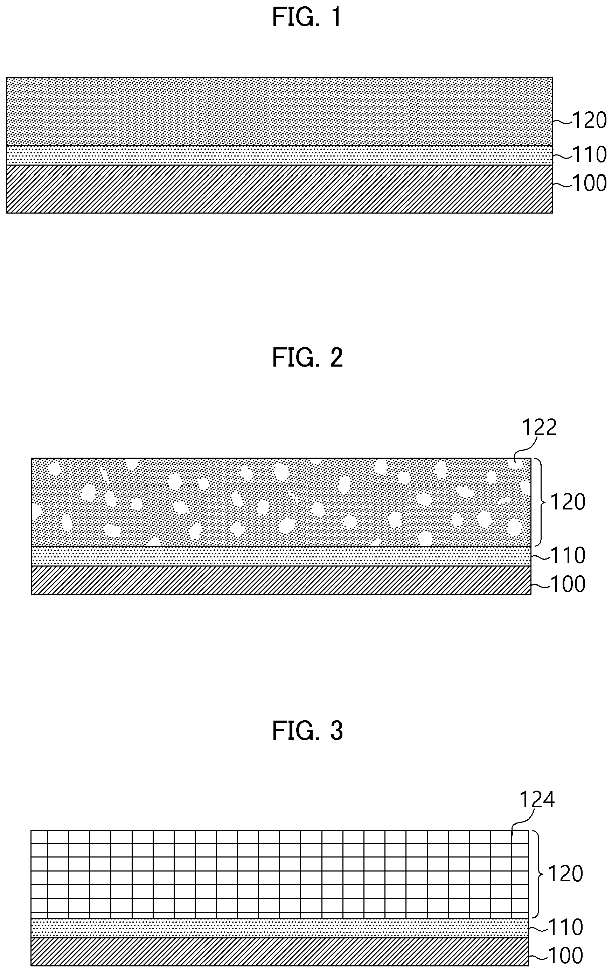

FIG. 1 is a schematic cross-sectional view illustrating an electrode for a lithium secondary battery according to example embodiments.

Referring to FIG. 1, an electrode for a lithium secondary battery (hereinafter, abbreviated as "electrode") may include an electrode current collector 100, a surface modification layer 110 disposed on the electrode current collector 100, and a porous layer 120 disposed on the surface modification layer 110.

The electrode current collector 100 may include gold, stainless steel, nickel, aluminum, iron, titanium, copper, or an alloy thereof, and may include, e.g., copper or a copper alloy.

The porous layer 120 may have high affinity for lithium, and may include, e.g., a lithiophilic material. The lithiophilic material may refer to a material having a low reduction potential and forming a lithium nucleus by reducing lithium ions on a surface.

A voltage at which lithium metal is electrodeposited on the lithiophilic material may be less than a voltage at which an alloying reaction occurs between the lithiophilic material and lithium. Accordingly, a lithium ion may be reduced to lithium metal in advance to a lithium alloy on the porous layer 120, and the lithium nucleus may be formed preferentially on the porous layer 120.

Lithium metal may be electrodeposited and grown on a surface of the porous layer 120. For example, electrodeposition and desorption reactions of lithium metal, not oxidation and reduction reactions of an electrode active material during charging and discharging, may be a main reversible reaction of a lithium secondary battery. In an embodiment, the lithium secondary battery may be provided as a lithium metal battery.

Thus, lithium metal may be grown in the porous layer 120 during charging and discharging of the lithium secondary battery. Lithium metal may have low reaction potential and a high reversible capacity, so that power properties and energy density of the lithium secondary battery may be improved.

In an embodiment, the porous layer 120 may include a lithiophilic metal as a lithium-affinity material. For example, the porous layer 120 may include a metal such as Cu, Zn, Ti, Au, Ag, Pt, Mg, Sn, Al, In, Pb, Bi or Sb, an oxide thereof, or an alloy of two or more therefrom.

In example embodiments, the porous layer 120 may include a matrix including the lithiophilic material and pores formed on a surface and at an interior of the matrix.

A current may be uniformly dispersed in the porous layer 120 through voids, so that a local current concentration may be suppressed. Thus, lithium metal may be uniformly grown in the porous layer 120 by a uniform current density, and a growth of a lithium dendrite may be suppressed.

For example, if a current density is unevenly distributed in the porous layer, the growth and electrodeposition of lithium metal may be concentrated in some regions due to a local current concentration. In this case, the lithium dendrites or lithium ion crystals may be grown in a region where the current is concentrated due to an overvoltage. The lithium dendrites have a low conductivity, and may easily lose an electrical contact, thereby lowering the capacity and energy density of the lithium secondary battery.

In an embodiment, at least a portion of the pores formed in the porous layer 120 may be connected from a top surface of the surface modification layer 110 to a top surface of the porous layer 120. Accordingly, lithium ions may be easily transferred to a lower portion of the porous layer 120, for example, to a surface modification layer 110, so that a top plating may be further suppressed.

In some embodiments, the porous layer 120 may include a fiber including the lithiophilic material.

The fiber may have a nonwoven fabric formed by interweaving or tangling a plurality of wire rods. The plurality of the wire rods may be formed of the lithiophilic material.

FIG. 2 is a schematic cross-sectional view illustrating an electrode for a lithium secondary battery according to example embodiments.

Referring to FIG. 2, the porous layer 120 may have a porous foam structure including the lithiophilic material.

For example, the porous foam may refer to a sponge-shaped porous structure formed of the lithiophilic material and including a plurality of pores 122 therein.

In an embodiment, the porous foam may include open pores or closed pores. The open pores may indicate pores connected to each other, and the closed pores may indicate pores separated from other pores.

FIG. 3 is a schematic cross-sectional view illustrating an electrode for a lithium secondary battery according to example embodiments.

Referring to FIG. 3, the porous layer 120 may have a framework structure including the lithiophilic material.

The framework may have a three-dimensional network structure. For example, lithiophilic wires 124 including the lithiophilic material may form the three-dimensional network to be connected to each other.

In an embodiment, in a plan view, the framework may have a mesh structure. For example, the lithiophilic wires 124 may extend to cross each other and may be connected to each other at intersections.

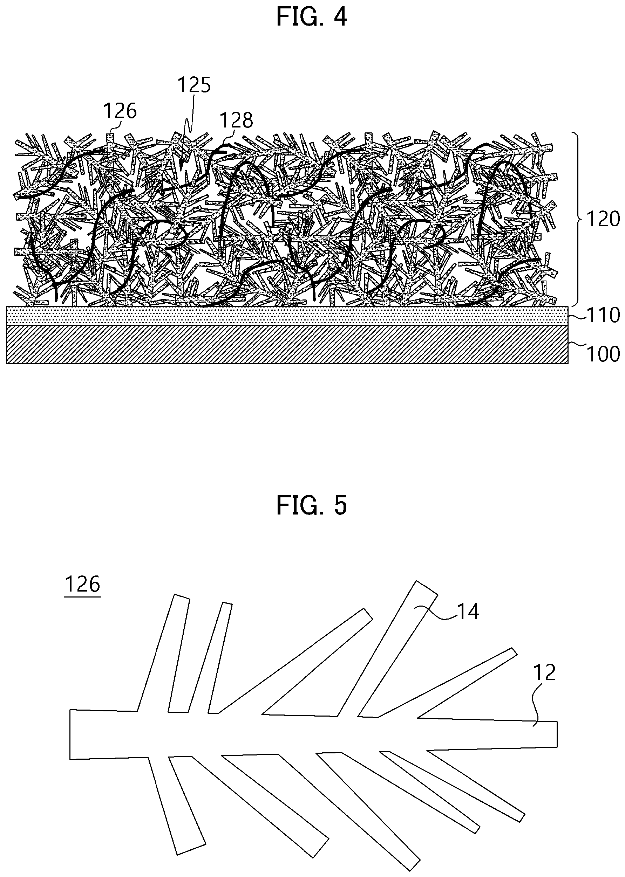

FIG. 4 is a schematic cross-sectional view illustrating an electrode for a lithium secondary battery according to example embodiments.

Referring to FIG. 4, the porous layer 120 may include metal-containing particles 126 including the lithiophilic material.

For example, the metal-containing particles 126 may be randomly arranged and may contact each other to form the porous layer. The metal-containing particles 126 may contact each other to form a three-dimensional network.

A void 125 may be formed between the metal-containing particles 126. An electrodeposition space of lithium metal may be provided by the void 125.

In example embodiments, each of the metal-containing particles 126 may have a spherical shape, a donut shape, a rod shape, a bent rod shape, a cone shape, a needle shape, a flake shape, a dendrite shape, or a dendrimer shape.

FIG. 5 is a schematic diagram illustrating metal-containing particles according to example embodiments.

Referring to FIG. 5, the metal-containing particles 126 may include a principal axis, and branches branched from the principal axis or protrusions extending from the main axis. The principal axis 12 is a central portion of the metal-containing particle 126, and may refer to a portion to which a plurality of branches 14 or a plurality of protrusions are connected. For example, the principal axis 12 may be a branch having the largest number of connection points among the branches of the metal-containing particles.

In an embodiment, the principal axis 12 may have a rod shape, a cone shape, a needle shape, or a bent rod shape. In an embodiment, the branch 14 may have a rod shape or a cone shape, and the protrusion may have a needle shape or a hemispherical shape.

In an embodiment, the protrusions or branches 14 may have a length and a diameter smaller than those of the principal axis 12.

In an embodiment, the metal-containing particles 126 may have a dendrite shape. Thus, the larger number of pores may be formed between the metal-containing particles 126. For example, adhesion of the metal-containing particles 126 may be reduced due to a three-dimensional hindrance, and thus an electrodeposition space of lithium metal between the metal-containing particles 126 may be increased.

Additionally, a surface area of the metal-containing particles 126 may be increased, and an electrodeposition site of lithium metal may be increased in the porous layer 120. Further, transfer of the lithium ions to a lower portion of the porous layer 120 may be facilitated, so that the lithium metal may be grown from the lower portion of the porous layer 120.

In example embodiments, the metal-containing particles 126 may include pores. For example, one through hole may be formed in the metal-containing particles 126, or a plurality of the pores may be formed at an interior and/or a surface of the metal-containing particles 126. The pores may include open pores or closed pores.

The metal-containing particles 126 may include the pores, so that a surface area of the porous layer 120 may be increased. Further, a space for the growth of lithium metal can grow may be additionally provided by the pores.

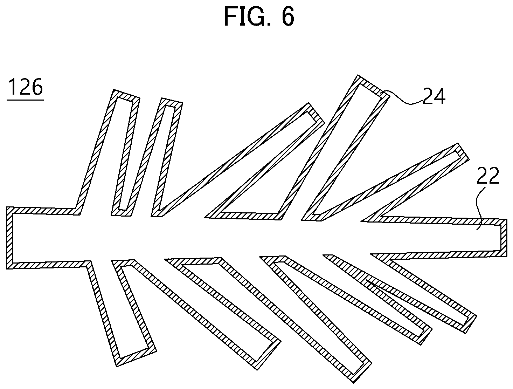

FIG. 6 is a schematic view illustrating metal-containing particles according to example embodiments.

Referring to FIG. 6, the metal-containing particle 126 may include a core 22 and a shell 24 covering at least a portion of the core 22. The core 22 may have the above-described spherical shape, donut shape, rod shape, bent rod shape, conical shape, needle shape, flake shape, dendrite shape or dendrimer shape.

In an embodiment, the shell 26 may have a film shape that entirely covers a surface of the core. In an embodiment, the shell may have an island shape locally formed on a partial region of the surface of the core.

In some embodiments, the shell 24 may include the above-mentioned lithiophilic metal, an oxide of the lithiophilic metal, or an alloy of the lithiophilic metal. Thus, a nucleus of lithium metal may be formed on the surface of the metal-containing particle 126, so that lithium metal may be electrodeposited and grown.

For example, the shell 24 may include at least one metal selected from the group consisting of Cu, Zn, Ti, Au, Ag, Pt, Mg, Sn, Al, In, Pb, Bi, or Sb, an oxide thereof, or an alloy of two or more therefrom.

In an embodiment, when the shell 24 includes the lithiophilic material, the core 22 may include a metal, a metal oxide, an alloy, a carbon-based compound, a polymer, etc.

In an embodiment, the core 22 may have a conductivity. Thus, a current density on the surface of the metal-containing particles may become uniform, and the transfer of the lithium ions may be further facilitated. Accordingly, lithium metal may be more uniformly electrodeposited.

For example, the core 22 may include at least one metal selected from the group consisting of Ni, Mn, Fe, Co, Cr, W, Ru, Cu, Zn, Ti, Au, Ag, Pt, Mg, Sn, Al, In, Pb, Bi, or Sb, an oxide thereof, or an alloy of two or more therefrom.

In some embodiments, a length of the metal-containing particles 126 may be in a range from 1 µm to 10 µm. The length of the metal-containing particles 126 may indicate a length of the longest portion of the metal-containing particles 126, e.g., for example, a length of a principal axis.

In the above range, a capacity and an energy density of the porous layer 120 may be further improved while suppressing non-uniform electrodeposition of lithium metal.

In an embodiment, the length of the metal-containing particles 126 may be in a range from 2 µm to 9 µm, from 2 µm to 8 µm, or from 2 µm to 5 µm. In the above range, stability and energy density of the lithium secondary battery may be further improved.

In some embodiments, the porous layer 120 may further include a binder 128.

For example, the binder 128 may bind the metal-containing particles to each other. Accordingly, structural stability of the electrode may be further improved, and life-span properties of the lithium secondary battery may be further improved.

In one embodiment, the binder 128 may include styrene-butadiene rubber (SBR), acrylated styrene-butadiene rubber, acrylonitrile-butadiene rubber, acrylic rubber, ethylene-propylene copolymer, polyepichlorohydrin, polyphosphazene, polyacrylonitrile, polystyrene, polyvinylpyridine, chlorosulfonated polyethylene, latex, polyester resin, acrylic resin, phenol resin, epoxy resin, acrylate resin, polyvinyl alcohol, polyaniline (PANI), polythiophene (PT), polyacetylene, polypyrrole (PPy), poly(3,4-ethylene dioxythiophene) (PEDOT), polyvinylidene fluoride (PVdF), vinylidene fluoride-hexafluoropropylene copolymer (PVDF-co-HFP), polyvinyl pyrrolidone (PVP), polytetrafluoroethylene (PTFE), polymethylmethacrylate, polyethylene, polypropylene, ethylene-propylene-diene monomer (EPDM), fluoroelastomer, etc. These may be used alone or in a combination of two or more therefrom.

In an embodiment, the binder 128 may include polyvinylidene fluoride, polytetrafluoroethylene, fluoroelastomer, etc., e.g., may include polyvinylidene fluoride and/or polytetrafluoroethylene.

In an embodiment, a content of the binder 128 may be greater than 0 wt% and 50 wt% or less, or greater than 0 wt% and 10 wt% or less, based on a total weight of the porous layer 120.

In an embodiment, a mixture of the metal-containing particles and/or the binder may be coated on the surface modification layer 110 to form the porous layer 120. The metal-containing particles may be randomly stacked on the surface modification layer 110 to form the porous layer 120.

In an embodiment, the mixture may further include a solvent. A solvent in which the metal-containing particles and the binder may be uniformly mixed may be used. For example, the solvent may include water, acetone, formic acid, chloroform, isopropanol, N-methylpyrrolidone (NMP), dimethylformamide, dimethylacetamide, dimethyl sulfoxide (DMSO), tetrahydrofuran (THF), etc.

In one embodiment, a thickness of the porous layer 120 may be in a range from 0.5 µm to 100 µm, from 1 µm to 90 µm, from 2 µm to 80 µm, from 3 µm to 60 µm, or from 5 µm to 50 µm. In the above range, the transfer of the lithium ions may be facilitated and a sufficient amount of lithium metal may be stored. Accordingly, the capacity and the energy density of the lithium secondary battery may be further improved.

The surface modification layer 110 may be formed on at least one surface of the electrode current collector 110, e.g., on both surfaces (e.g., an upper surface and a lower surface). The surface modification layer 110 may be formed by coating or depositing a material for forming the surface modification layer on the electrode current collector 100.

For example, the surface modification layer may be grown on the electrode current collector 100 by a deposition method. A deposition method may include a chemical vapor deposition (CVD), an atomic layer deposition (ALD), a plasma enhanced chemical vapor deposition (PECVD), etc.

The surface modification layer 110 may include the lithiophilic material. On the lithiophilic material, a voltage at which the lithium ions form an alloy with the lithiophilic material may be higher than a voltage at which the lithium ions are reduced to lithium metal, so that the electrodeposition of lithium metal may occur preferentially.

The surface modification layer 110 may have high affinity with respect to lithium, so that lithium metal may be electrodeposited from the surface modification layer 110. For example, a voltage for generating a nucleus of lithium metal on the electrode current collector 100 may be relatively high to reduce a reactivity with respect to lithium ions. Thus, when charging and discharging the lithium secondary battery, lithium may be electrodeposited on the porous layer 120 in advance, so that lithium metal may grow irregularly. In this case, the growth of the lithium dendrites may be promoted, and the capacity and the energy density of the lithium secondary battery may be lowered.

In example embodiments, the surface modification layer 110 may be formed on the surface of the electrode current collector 100, so that a resistance of lithium nucleation may be reduced, and a high affinity for lithium may be provided. Thus, a top plating of lithium metal may be suppressed, and thus lithium metal may be uniformly deposited in the porous layer 120 and the growth of the lithium dendrite may be suppressed.

In some embodiments, the surface modification layer 110 may cover at least a portion of the surface of the electrode current collector 100, e.g., may cover an entire surface of the electrode current collector 100. In an embodiment, the surface modification layer 110 may have a non-porous structure.

In example embodiments, the surface modification layer 110 may include the above-mentioned lithiophilic metal, an oxide of the lithiophilic metal, an alloy of the lithiophilic metal, a carbon-based compound such as or graphene, or boron nitride.

In some embodiments, the surface modification layer 110 may include boron nitride. Boron nitride may be formed of nitrogen and boron having different electron densities to an electron conductivity while having an affinity to lithium. Thus, lithium metal may be uniformly electrodeposited from the lower portion of the porous layer 120 by the surface modification layer 110. Accordingly, the growth of the lithium dendrites and the resulting pressure may be suppressed, and the-span properties of the lithium secondary battery may be further improved.

In some embodiments, boron nitride may have an amorphous structure. Due to high irregularity of atomic arrangement in the amorphous structure, a resistance to lithium nucleation may be further reduced. Thus, lithium metal may be more uniformly electrodeposited on the surface modification layer 110. Further, the surface modification layer 110 having a relatively small thickness may be formed by a low crystallinity of boron nitride, and mechanical strength of the surface modification layer 110 may be increased by the amorphous boron nitride.

In some embodiments, a thickness of the surface modification layer 110 may be less than that of the porous layer 120. As the thickness of the porous layer 120 relatively increases, an amount of the electrodeposited lithium metal may be increased and a volume change during charging and discharging may be reduced.

In some embodiments, the thickness of the surface modification layer 110 may be in a range from 0.5 nm to 500 nm. In the above range, the energy density and the power properties of the lithium secondary battery may be further improved while suppressing the top electrodeposition and the growth of the lithium dendrite.

The lithium secondary battery according to embodiments of the present disclosure may include the electrode for a lithium secondary battery according to the above-described embodiments and a counter electrode opposite to the electrode for a lithium secondary battery.

In some embodiments, the counter electrode may be a cathode. For example, the lithium secondary battery electrode may have a substantially anode-free structure.

In an embodiment, the cathode may be a lithium metal electrode. For example, the cathode may include a lithium foil.

In an embodiment, the cathode may include a cathode current collector and a cathode active material layer formed on the cathode current collector.

For example, a cathode slurry may be prepared by mixing and stirring a cathode active material with a cathode binder, a conductive material, and/or a dispersing agent in a solvent. The cathode slurry may be coated on at least one surface of a cathode current collector, and then dried and pressed to obtain the cathode.

The cathode current collector may include stainless steel, nickel, aluminum, titanium, or an alloy thereof. The cathode current collector may also include aluminum or stainless steel surface-treated with carbon, nickel, titanium, or silver.

Examples of the cathode active material may include one or more compounds selected from a lithium iron phosphate compound, a lithium cobalt oxide, a lithium manganese oxide, a lithium nickel oxide or a lithium composite oxides. For example, the cathode active material may include a layered compound such as lithium cobalt oxide (LiCoO₂) or lithium nickel oxide (LiNiO₂), a lithium manganese oxide such as LiMnO₃, LiMn₂O₃ and LiMnO₂; lithium copper oxide (Li₂CuO₂); LiV₃O₈, LiFe₃O₄, a vanadium oxide such as V2O₅ and Cu₂VO₇; a lithium iron phosphate oxide such as LiFePO₄, or the like.

In some embodiments, the cathode active material may include a compound represented by Chemical Formula 1 below.

[Chemical Formula 1] LiₐNi_{b}M_{1-b}O₂

In Chemical Formula 1, 0.95≤a≤1.08, b≥0.5, and M may be at least one element selected from the group consisting of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Zr.

In an embodiment, the cathode active material includes nickel (Ni), and may further include at least one of cobalt (Co) or manganese (Mn). For example, a nickel-cobalt-manganese (NCM)-based lithium oxide may be used as the cathode active material.

For example, nickel (Ni) may be provided as a metal associated with the capacity of the lithium secondary battery. A higher nickel content may improve the capacity and output of a lithium secondary battery. However, an excessive nickel content may decrease the life-span and may be disadvantageous in an aspect of mechanical and electrical stability.

In an embodiment, cobalt (Co) may improve a conductivity or a resistance of the lithium secondary battery, and manganese (Mn) may improve the mechanical and electrical stability of the lithium secondary battery.

The chemical structure represented by Chemical Formula 1 represents bonding relationships within a lattice structure or a crystal structure of the cathode active material and does not exclude an addition of another element. For example, M may serve as a main active element of the cathode active material. Chemical Formula 1 is provided to express the bonding relationships of the main active element, and is to be understood to encompass introduction and substitution of the additional element.

In an embodiment, an auxiliary element may be included in addition to the main active element to enhance chemical stability of the cathode active material or the crystal structure. The auxiliary element may be incorporated into the crystal structure to form a bond, this case is to be understood as being included within the range of the chemical structure represented by Chemical Formula 1.

The cathode binder may include a material substantially the same as or similar to the material described in the electrode for the lithium secondary battery. For example, a PVDF-based binder may be used as the cathode binder.

The conductive material may be included to promote electron transfer. For example, the conductive material may include a carbon-based conductive material such as graphite, carbon black, graphene, carbon nanotube, etc., and/or a metal-based conductive material such as tin, tin oxide, titanium oxide, a perovskite-based material including LaSrCoO₃, LaSrMnO₃, etc.

In some embodiments, a separator may be interposed between the electrode for a lithium secondary battery electrode and the counter electrode. The separator may include a porous polymer film formed of a polyolefin polymer such as an ethylene homopolymer, a propylene homopolymer, an ethylene/butene copolymer, an ethylene/hexene copolymer, an ethylene/methacrylate copolymer, or the like. The separator may also include a nonwoven fabric formed of a glass fiber with high melting point, a polyethylene terephthalate fiber, or the like.

In example embodiments, an electrode assembly may be formed by repeatedly arranging the electrode for a lithium secondary battery, the counter electrode and the separator. In some embodiments, the electrode assembly may be formed as a winding-type, a stacking-type, a zigzag folding-type, or a stack-folding type.

The electrode assembly may be housed in a case to define the lithium secondary battery. The lithium secondary battery may be fabricated, e.g., in a cylindrical shape using a can, a prismatic shape, a pouch shape, or coin shape.

In example embodiments, an electrolyte solution may be housed within the case together with the electrode assembly. A non-aqueous electrolyte solution may be used as the electrolyte solution.

The non-aqueous electrolyte solution may include a lithium salt as an electrolyte and an organic solvent. The lithium salt may be expressed as, e.g., Li⁺X⁻, and examples of the anion (X₋) of the lithium salt include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

Examples of the organic solvent may include propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethylsulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more therefrom.

In some embodiments, a solid electrolyte layer may be interposed between the electrode for of a lithium secondary battery and the counter electrode. The solid electrolyte layer may include a sulfide-based electrolyte, an oxide-based electrolyte or a polymer electrolyte. The polymer electrolyte may include an ion-conductive polymer or a gel polymer electrolyte.

In this case, the lithium secondary battery may not include a separator or an electrolyte solution. The solid electrolyte layer may substantially serve as a separator, and may prevent a short-circuit between the electrode for a lithium secondary battery and the counter electrode. Further, lithium ions may be transferred between the counter electrode and the electrode for a lithium secondary battery via the solid electrolyte layer.

In one embodiment, the sulfide-based electrolyte may be represented by Chemical Formula 2 below.

[Chemical Formula 2] Li_{c}Y_{f}P_{g}SₕZᵢ

In Chemical Formula 2, 0<e<12, 0≤f≤6, 0≤g≤6, 0 <h≤12, 0≤i≤9, Y may be at least one element selected from the group consisting of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z may be at least one element selected from the group consisting of F, Cl, Br and I.

For example, the sulfide-based electrolyte may be an LPS-based solid electrolyte including Li, P and S, an LGPS-based solid electrolyte including Li, P, Ge and S, or an LSiPSCl-based solid electrolyte including Li, Si, P, S and Cl.

For example, the sulfide-based electrolyte nay include Li₂S-P₂S₅, Li₁₀GeP₂S₁₂, Li₁₀SnP₂S₁₂, Li_{9.54}Si_{1.74}P_{1.44}S_{11.7}Cl_{0.3}, Li₁₀(Si_{0.5}Ge_{0.5})P₂S₁₂, Li₁₀(Ge_{0.5}Sn_{0.5})P₂S₁₂, Li₁₀(Si_{0.5}Sn_{0.5})P₂S₁₂, Li₁₀GeP₂S_{11.7}O_{0.3}, Li_{9.6}P₃S₁₂, Li₉P₃S₉O₃, Li_{10.35}Ge_{1.35}P_{1.65}S₁₂, Li_{10.35}Si_{1.35}P_{1.65}S₁₂, Li_{9.81}Sn_{0.81}P_{2.19}S₁₂, Li_{9.42}Si_{1.02}P_{2.1}S_{9.96}O_{2.04}, Li₆PS₅Cl, or the like.

In an embodiment, the oxide-based electrolyte may include a metal oxide or an ion-conductive compound containing oxygen.

Examples of the metal oxide include Al₂O₃, ZnO₂, Ce₂O₃, TiO₂, ZrO₂, HfO₂, MnO₂, MgO, WO₂, V₂O₅, etc.

Examples of the ion-conductive compound include a garnet-based compound such as an LLZO-based compound; a perovskite-based compound such as an LLTO-based compound; a NASICON-based compound such as Li₁₊ₓAlₓGe₂₋ₓ(PO₄)₃ (0<x<2), Li₁₊ₓAlₓTi₂₋ₓ(PO₄)₃ (0<x<2), Li₁₊ₓTi_{2-x-y}AlₓSi_{y}(PO₄)_{3-y} (0≤x≤1, 0<y≤1), an LAGP-based compound, an LATP-based compound, LiAlₓZr₂₋ₓ(PO₄)₃ (0≤x≤1, 0≤y≤1), LiTiₓZr₂₋ₓ(PO₄)₃ (0≤x≤1, 0≤y≤1); an LIPON-based compound; Li₆La₂CaTa₂O₁₂; Li₆La₂ANb₂O₁₂ (A is Ca or Sr); Li₂Nd₃TeSbO₁₂, Li₃BO_{2.5}N_{0.5}; Li₉SiAlO₈, etc.

Hereinafter, embodiments of the present disclosure will be further described with reference to specific experimental examples. Examples and comparative examples included in the experimental examples provides merely examples of the present disclosure and do not limit the appended claims. It is clear to those skilled in the art that various changes and modifications to embodiments are possible within the scope of the present disclosure and technical ideas, and such changes and modifications are included in the scope of the appended claims.

### (1) Preparation of metal-containing particles

An aluminum plate was placed in a first electrolyte solution in which copper chloride was dissociated, and subjected to a spontaneous substitution reaction at room temperature for a predetermined period of time. A dendrite-shaped copper powder was formed on a surface of the aluminum plate.

The copper powder was immersed in a second electrolyte solution in which silver nitrate (AgNO₃), silver hydrochloride (AgCl), silver sulfate (Ag₂SO₄) or silver fluoride (AgF) was dissociated. A silver-containing coating was formed on the copper powder by a spontaneous substitution reaction at room temperature for a predetermined period of time. The silver-containing coating was formed on the copper powder to prepare metal-containing particles.

### (2) Preparation of electrode for lithium secondary battery

### Example 1

Amorphous boron nitride was deposited on a copper foil by a CVD to form a surface modification layer. An NMP solution (solids content: 60 wt%) containing 90 wt% of the metal-containing particles and 10 wt% PVdF was cast on the surface modification layer by a doctor blade method. Thereafter, the cast solution was dried to form a porous layer on the surface modification layer.

### Comparative Example 1

An NMP solution (solids content: 60 wt%) containing 90 wt% of the metal-containing particles and 10 wt% of PVdF was cast on a copper foil using the same method as that in Example 1. The cast solution was dried to form a porous layer on the copper foil.

### Comparative Example 2

A surface modification layer was formed by depositing an amorphous boron nitride on a copper foil using a CVD. The copper foil on which the boron nitride was deposited was used as an electrode without a process for a porous layer formation.

### Comparative Example 3

A copper foil was solely used as an electrode current collector without forming a surface modification layer and a porous layer.

### (3) Fabrication of lithium secondary battery

A cathode slurry was prepared by mixing LiNi_{0.6}Co_{0.2}Mn_{0.2}O₂ as a cathode active material, PVdF as a binder, and carbon black as a conductive material in a weight ratio of 95:2.5:2.5. The cathode slurry was coated on an aluminum foil, dried and pressed to prepare a cathode.

A coin cell was manufactured using the electrode for a lithium secondary battery electrode and the cathode.

Specifically, the electrode for a lithium secondary and the cathode were each notched into a circular shape, and a circular polyethylene separator was interposed between the electrode for a lithium secondary and cathode to obtain an electrode assembly.

The electrode assembly was placed in a coin-shaped outer case, and an electrolyte solution was injected to fabricate a coin-shaped lithium secondary battery. A 1M LiPF6 solution containing ethylene carbonate (EC)/ethylmethyl carbonate (EMC) (3:7 v/v) and 2 wt% fluoroethylene carbonate (FEC) was used as the electrolyte solution.

### Experimental Example

### (1) Evaluation on lithium electrodeposition property

The lithium secondary battery prepared in Examples and Comparative Examples was charged, and the lithium secondary battery electrodes was disassembled in the charged state.

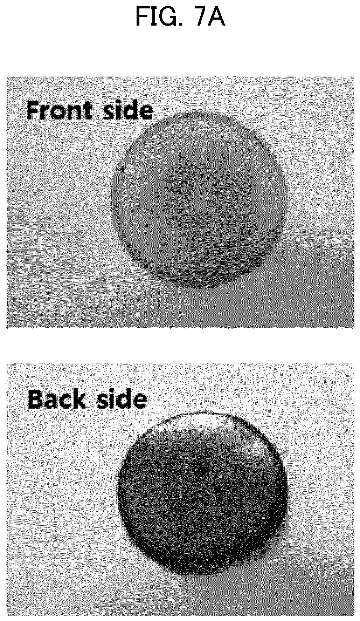

FIGS. 7A to 7D are images of electrodes for a lithium secondary battery of Example 1, Comparative Example 1, Comparative Example 2 and Comparative Example 3, sequentially.

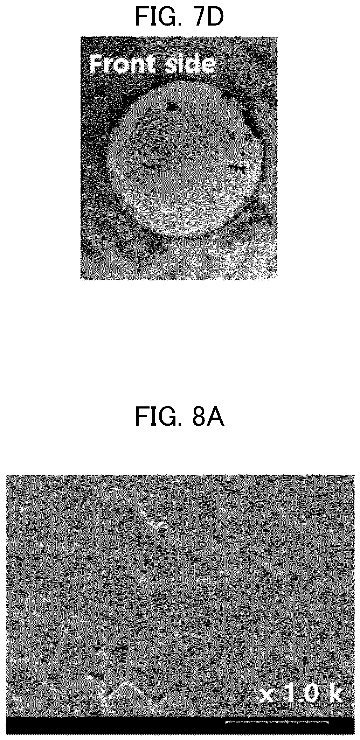

FIGS. 8A to 8D are SEM images of cross-sections of electrodes for a lithium secondary battery of Example 1, Comparative Example 1, Comparative Example 2 and Comparative Example 3, sequentially.

Referring to FIGS. 7A and 8A, in the electrode for a lithium secondary battery of Example 1, lithium metal was uniformly deposited while suppressing electrode expansion and maintaining a uniform surface even during charging.

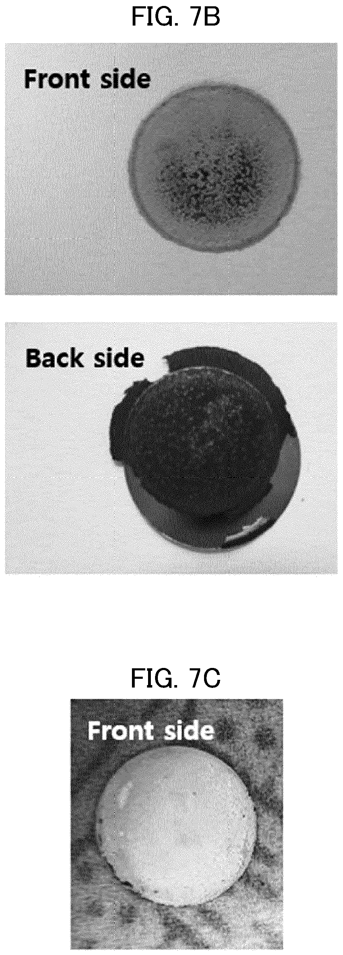

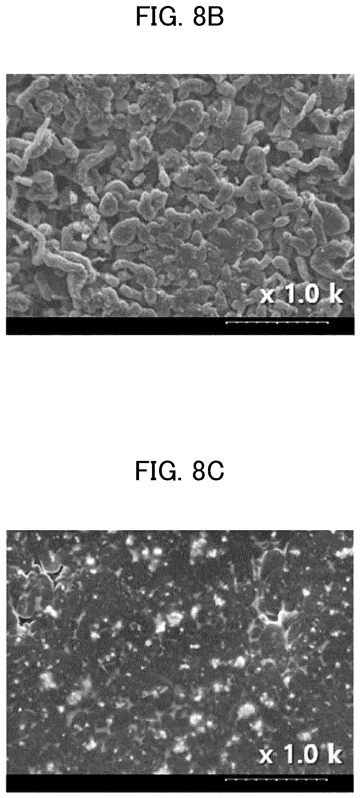

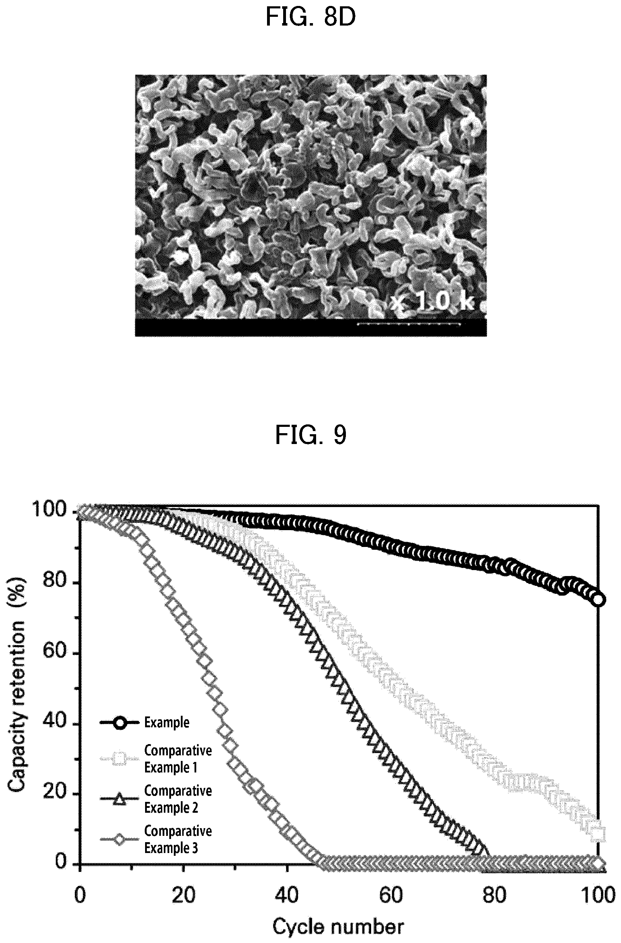

Referring to FIGS. 7B and 8B, in the electrode for a lithium secondary battery of Comparative Example 1, growth of lithium dendrites was increased. Referring to FIGS. 7C and 8C, in the electrode for a lithium secondary battery of Comparative Example 2, lithium metal was formed directly on the current collector to cause volume expansion. Referring to FIGS. 7D and 8D, in the electrode for a lithium secondary battery of Comparative Example 3, growth of lithium dendrites was increased and volume expansion of the electrode occurred.

### (2) Evaluation on life-span property

The lithium secondary batteries of Examples and Comparative Examples were repeatedly charged and discharged, with each cycle of a charge (CC-CV 0.5C, 4.3 V cutoff) and a discharge (CC 0.5C, 2.7 V cutoff). An initial discharge capacity in the first cycle was measured, and a capacity retention was evaluated by calculating a discharge capacity in each cycle as a percentage relative to the initial discharge capacity.

The measurement results are shown in FIG. 9.

Referring to FIG. 9, the lithium secondary battery according to Examples maintained 75% or more of the capacity until 90 cycles.

In Comparative Example 1, the capacity of the lithium secondary battery decreased to 8% or less at the 100th cycle. The lithium secondary battery according to Comparative Example 2 was not operated after the 80th cycle. The lithium secondary battery according to Comparative Example 3 showed a rapid decrease in capacity from the initial cycle, and the capacity was decreased by 10% or less after the 40th cycle.

The above descriptions are merely examples applying the inventive concepts of the present disclosure, and other elements may be further included without departing from the scope of the present disclosure.

## Claims

1. An electrode for a lithium secondary battery, comprising:
an electrode current collector;
a surface modification layer disposed on the electrode current collector; and
a porous layer disposed on the surface modification layer.

2. The electrode for a lithium secondary battery according to claim 1, wherein the surface modification layer comprises a lithiophilic material.

3. The electrode for a lithium secondary battery according to claim 2, wherein lithium ions are reduced to lithium metal on the lithiophilic material at a voltage lower than a voltage at which the lithiophilic material and the lithium ions form an alloy.

4. The electrode for a lithium secondary battery according to any one of claims 2 or 3, wherein the surface modification layer comprises boron nitride.

5. The electrode for a lithium secondary battery according to claim 4, wherein boron nitride has an amorphous structure.

6. The electrode for a lithium secondary battery according to any one of claims 1 to 5, wherein a thickness of the surface modification layer is smaller than a thickness of the porous layer.

7. The electrode for a lithium secondary battery according to any one of claims 1 to 6, wherein the porous layer comprises a lithiophilic material.

8. The electrode for a lithium secondary battery according to claim 7, wherein the lithiophilic material comprises at least one metal selected from the group consisting of Cu, Zn, Ti, Au, Pt, Mg, Sn, Ag, Al, In, Pb, Bi or Sb, an oxide thereof, or an alloy of two or more thereof.

9. The electrode for a lithium secondary battery according to claim 7 or 8, wherein the porous layer comprises a matrix comprising the lithiophilic material, and pores formed at a surface and an interior of the matrix.

10. The electrode for a lithium secondary battery according to claim 9, wherein the porous layer comprises fibers or a porous foam which comprises the lithiophilic material.

11. The electrode for a lithium secondary battery according to claim 9 or 10, wherein the porous layer comprises a framework containing the lithiophilic material and having a three-dimensional network structure.

12. The electrode for a lithium secondary battery according to any one of claims 9 to 11, wherein the porous layer comprises metal-containing particles that contain the lithiophilic material, and voids formed between the metal-containing particles.

13. The electrode for a lithium secondary battery according to claim 12, wherein the metal-containing particles have a dendrite shape.

14. The electrode for a lithium secondary battery according to claim 12 or 13, wherein the metal-containing particles comprise a core and a coating covering at least a portion of the core, the coating comprising the lithiophilic material.

15. The electrode for a lithium secondary battery according to claim 14, wherein the core comprises at least one metal selected from the group consisting of Ni, Mn, Fe, Co, Cr, W, Ru, Cu, Zn, Ti, Au, Ag, Pt, Mg, Sn, Al, In, Pb, Bi or Sb, an oxide thereof, or an alloy of two or more thereof.

16. The electrode for a lithium secondary battery according to any one of claims 9 to 15, wherein at least some of the pores are connected from an upper surface of the surface modification layer to an upper surface of the porous layer.

17. The electrode for a lithium secondary battery according to any one of claims 1 to 16, wherein the surface modification layer has a non-porous structure.

18. A lithium secondary battery, comprising:
the electrode for a lithium secondary battery according to any one of claims 1 to 17; and
a counter electrode opposing the electrode for a lithium secondary battery.
